# EUROPEAN PATENT APPLICATION

(11) **EP 1 602 789 A1**
(43) Date of publication of application: **07.12.2005**
(21) Application number: 04701886.6
(22) Date of filing: 14.01.2004
(51) Int. Cl.: E04B 1/90, B32B 13/12

(54) **A COMPOSITE SANDWICH WALL PANEL**

(30) Priority: 28.01.2003 CN 03113703
(71) Applicant: Cheng, Chi Wai, Hong Kong (CN)
(72) Inventor: Cheng, Chi Wai, Hong Kong (CN)
(74) Representative: Tomkinson, Alexandra
(86) International application number: PCT/CN2004/000044
(87) International publication number: WO 2004/067871

(57) **Abstract**

**SUMMARY OF THE INVENTION**

The aim of the invention, the Reconstructable Wall Panel is to resolve the above problems and able to supply a light-weight wall panel system that is strong enough to carry heavy objects, easy to install and friendly to the environment.

Aforementioned invention is invented in this way. The Reconstructable Wall Panel is designed that the central layer is composed of at least no less than two pieces of modified gypsum or sand and cement with fibre glass mesh installed inside and at least no less than one piece of polystyrene foam board in between. Its front layer and bottom layers are designed with fine sand gypsum or sand and cement boards with glass fibre mesh inside as well.

## Description

### TECHNICAL FIELD

The invention is a light-weight wall partition panel / system in the construction business.

### BACKGROUND OF THE INVENTION

It is common sense that the traditional wall construction was done in brick/ block. But the manufacturing of the red blocks or concrete block is consuming great quantity of clay soil and energy. In addition, the burning and manufacture of red blocks is prohibited as it is highly energy inefficient and contaminate our natural environment. The subsequent replacement is the light- weight cement block or board, internal hollow cement wall panel or gypsum board stud wall with the following deficiencies:
1. Unable to carry heavy domestic objects, such as bookshelf, cabinet and air conditioner etc. Special arrangement to the wall panel is required in order to carry such heavy objects. Thus, flexibility to the hanging object after installation is not available.
2. There are no perfect panel joints in any dry wall or concrete block wall systems. As the panel is usually jointed in different compound or even adhesive tape, temperature variation would cause panel joint separation again. Plaster covering the crack again is unavoidable and adding cost to the wall panel refurnishment.
3. Under the condition of the imperfect joint completion or cracking problem as mentioned above in hollow cement wall panels, it is easy to become the "home" of different household insects and other unwelcome living organism and storage of waste!

### SUMMARY OF THE INVENTION

The aim of the invention, the Reconstructable Wall Panel is to resolve the above problems and able to supply a light-weight wall panel system that is strong enough to carry heavy objects, easy to install and friendly to the environment.

Aforementioned invention is invented in this way. The Reconstructable Wall Panel is designed that the central layer is composed of at least no less than two pieces of modified gypsum or sand and cement with fibre glass mesh installed inside and at least no less than one piece of polystyrene foam board in between. Its front layer and bottom layers are designed with fine sand gypsum or sand and cement boards with glass fibre mesh inside as well.

This invention, the Reconstructable Wall Panel has the following superiorities as compared to the present market wall panels:
1. Light weight and easy to install:
   The weight of the invented Reconstrutable Wall Panel (Internal and External) is no more than 40 to 50 kg per m2. Installation requires two workers only.
2. Able to carry heavy objects:
   By using the general wall hanger in the market, the wall system could carry all kinds of domestic heavy objects.
3. 'Reconstructable' to become a single partition panel:
   Pieces of Reconstructable wall panels are jointed by means of the extended fibreglass mesh and homogeneous joint compound. The fibreglass mesh provides a structural link between individual panels and reinforces the joint compound to ensure no contraction and crack free situation like a complete single wall panel.
4 No finishing plaster is needed after installation:
   As the surfaces of the wall panel are flat and smooth, while the panel material and the joint mortar are homogeneous single material, the finish surface of the wall panel only require a simple skim coat of plaster before paint and wall paper application.
5. Sound Insulation:
   As the Reconstructable Wall Panel is designed with gypsum and polystyrene boards, which are good sound insulating materials, and the design of tongue and grove joint reinforcement, the panel is a good separation of noise as compared with other wall panel system in the same thickness.
6. Thermal Insulation:
   Besides sound insulating, both gypsum and polystyrene boards are also good heat insulator. The combination of both heat insulating materials in this panel provides the best thermal separation.
7. Fire Separation:
   Both sides of the Reconstructable Wall panels are designed with modified gypsum or cement, which are materials for fire separation, the invented panel can provide 1hr or 2 hr fire separation.

### BRIEF DESCRIPTION OF DRAWING

Diagram 1 - Simple Reconstructable Wall Panel Sectional Diagram
Diagram 2 - Applied Reconstructable Wall Panel Sectional Diagram

### STANDARD SPECIFICATION

The invented reconstructable wall panel has a standard length of 2700 mm and varies to 3000 mm while the width is 600 mm. The general thickness are 75mm and 100 mm but the overall size could be adjusted and manufacture according to requirement.

Manufacturing of the invented reconstructable wall panel is as follows: fine sand modified gypsum or sand and cement mortar is mixed and pour into a mould of required size. The fibre glass mesh is added inside forming a fine sand modified gypsum or sand and cement panel with fibre glass mesh extended beyond the limit of the panel at all sides. The pre-cut polystyrene board is added in between the pre-described manufactured panel layer and form into a three layer reconstructable wall panel. For five-layer or more-layer reconstructable wall panels, they could be formed according to aforementioned production procedures.

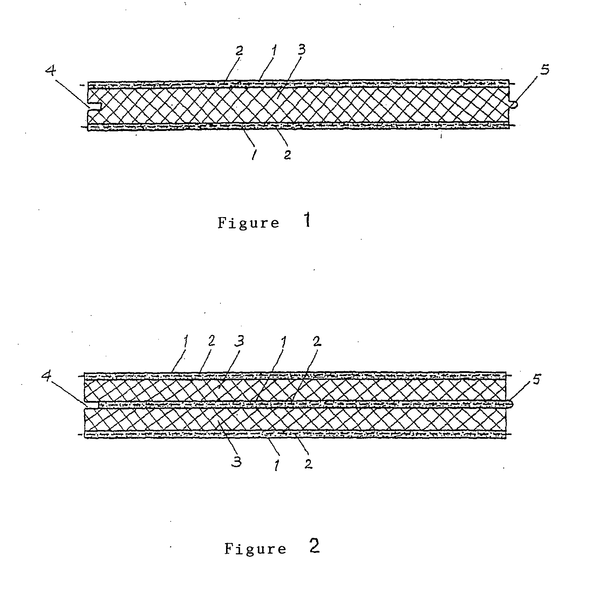

Attached Drawing: as in sectional diagram 1 & 2:
1 is fibreglass mesh
2 is modified fine sand gypsum or cement sand board
3 is polystyrene panels
4 is joint grove
5 is joint tongue

Before the production of the aforementioned standard specification, the following pre-arrangement could be implied:

The fine sand in the modified gypsum or sand inside the cement panel with fibre glass mesh inside layer is at granular size of 0.25 - 1.5mm. The ratio (by weight) is 10% - 30%. Sand with bigger size would destroy the brightness of the panel surface while the smaller size could not keep up the strength of the panel.

The fibre glass mesh install inside the fine sand modified gypsum or sand and cement layer is at the thickness of 8mm - 12mm. The mesh eyelet is from 3mm x 3mm to 5mm x 5mm. The mesh eyelet at bigger size would reduce the mesh flexibility while mesh eyelet at smaller size would affect the reinforcement of the joint.

The fibre glass mesh installed inside the fine sand modified gypsum or sand and cement layer is extended outside the panel at 15mm - 35mm at left and right side and 30mm - 60mm at top and bottom of the panel. The reinforcement of the mesh could strengthen the panel joint without any crack.

The fine sand modified gypsum or sand and cement with fibre-glass mesh inside laminated panel could be added 0.15% - 0.3% methycellulose ether and 0.5% - 1.5% redispersable powder. The redispersable powder could be the mixture of vinyl acetate/ethylene copolymer or ethylene/ vinyl laurate/ vinyl chloride terpolymer.This addition could improve the flexural and shear strength and reinforcement of the panel.

The manufacturing of the Internal Reconstructable Wall panel into 5 layers is the best standard. The front and bottom layer and the 3^{rd} layer in between are fine sand modified gypsum or sand and cement with fibre glass mesh inside while the 2^{nd} and the 4^{th} layers are polystyrene foam boards.

## Claims

1. The invention is a light-weight 're-constructable'wall panel. The invented central layer of the Wall Panel is composed of at least no less than two pieces of fine sand gypsum or sand and cement boards with fibre glass mesh installed inside and at least no less than one piece of polystyrene foam board in between. Its front layer and bottom layer are designed with fine sand gypsum or sand and cement boards with glass fibre mesh inside as well.

2. According to designated patent application as described in item no.1, one of the invented design of reconstructable wall panel is that the wall panel central layer's modified gypsum or sand and cement with fiber glass mesh inside has some chemical additives and fine sand. This modified gypsum or sand and cement include 10% to 30% (by weight ratio) fine sand in the granular size between 0.25 to 1.5 mm.

3. According to designated patent application as described in item no. 1, one the invented design of the reconstructable wall panel is that the thickness of the wall panel central layer, having modified gypsum or sand and cement with fibre glass mesh inside, is between 8 - 12 mm.

4. According to designated patent application as described in item no. 1, one of the invented design of the reconstructable wall panel is that the fibre glass mesh installed in the wall panel is at mesh eyelet size between 3 mm x 3 mm to 5mm x 5mm.

5. According to designated patent application as described in item no. 1, one of the invented design of the reconstructable wall panel is that. The fibreglass mesh inside the modified gypsum or sand and cement board is to extend outside the wall panel at 15mm to 35mm at left and right side and 30mm to 60mm at top and bottom of the panel.

6. According to designated patent application as described in item no. 1, one of the invented design of the reconstructable wall panel is that the internal reconstructable wall panel is composed of 5 layers. The first (front), third and fifth (bottom) layers are designed with fibre glass mesh inside the modified gypsum or sand and cement while the second and fourth layers are designed with polystyrene foam board.

7. According to designated patent application as described in item no. 1, one of the invented design of the reconstructable wall panel is that the EXTERNAL reconstructable wall panel is composed of 5 layers. The first (front) layer is designed with fibreglass mesh inside the cement board composed of fine sand (with granular size between 0.25mm to 1.50mm) and cement. The third and the fifth layer are designed with fibreglass mesh inside the modified gypsum board while the second and the fourth layers are designed with polystyrene foam board.
